# EUROPEAN PATENT SPECIFICATION

(11) **EP 4 599 166 B1**
(45) Date of publication and mention of the grant of the patent: **25.11.2026**
(21) Application number: 23789695.6
(22) Date of filing: 03.10.2023
(51) Int. Cl.: F04B 17/03, F04B 23/02, F04B 49/02, F04B 49/06, F04D 1/00

(54) **PUMP CONTROL METHODS**
PUMPENSTEUERUNGSVERFAHREN
PROCÉDÉS DE COMMANDE DE POMPE

(30) Priority: 03.10.2022 GB 202214542
(43) Date of publication of application: 13.08.2025
(73) Proprietor: Aspen Pumps Limited, Hailsham, East Sussex BN27 3WA (GB)
(72) Inventor: MARTIN, Walter, Sussex BN27 3WA (GB); FORSHAW, Chris, Sussex BN27 3WA (GB); CAPON, Phil, Sussex BN27 3WA (GB); PREECE, Lee, Sussex BN27 3WA (GB); SAICH, Claire, Sussex BN27 3WA (GB); MOLYNEUX, Lee, Kent TN2 4HX (GB)
(74) Representative: Brown, Alexander Edward
(86) International application number: PCT/GB2023/052542
(87) International publication number: WO 2024/074811

(56) References cited:
- WO-A1-2005/088134
- AU-A1- 2015 268 609
- US-A- 5 597 960
- US-A1- 2009 202 359
- US-A1- 2019 120 234

## Description

The present invention relates to methods of operating condensate pumps, and particularly to methods for controlling peristaltic condensate pumps.

### BACKGROUND

Condensate pumps are used to pump liquid condensate from appliances that produce condensate, for example an air conditioning system, HVAC (heating, ventilation and air conditioning) system, a condensing boiler system or a refrigerator, out of a room or building. In a typical air conditioning system, the air conditioning unit produces liquid condensate, i.e. water, which may be collected in a tray or reservoir, and needs to be drained away from the appliance. If the appliance installation location is such that it is not practical to provide an open drainage duct to drain under gravity away from the appliance or tray/reservoir, a condensate pump is required to pump the condensate away from the appliance to a suitable liquid drain.

One example of a condensate pump is known as a peristaltic pump. Peristaltic pumps typically contain a head tube in fluid communication with a liquid source and a discharge line. A rotor, driven by an electric pump motor, is normally provided to squeeze a portion of the tube to drive liquid from the liquid source to the discharge line via the head tube.

Some prior art condensate pumps include a liquid reservoir in the form of a liquid receptacle. The condensate pump may be mounted to a wall of the room or building, typically below the appliance, or otherwise integrated into or disposed within the appliance housing. When the liquid receptacle is sufficiently filled with liquid, the liquid is pumped away from the liquid receptacle by the condensate pump, for example outside the room, via a liquid outlet. If the condensate is not removed sufficiently quickly, such as by pump malfunction or the pump not operating sufficiently relative to how quickly condensate is created, this can cause an overflowing receptacle or other condensate escape. Leakage of condensate can also result in water damage to building surfaces and structure and resulting cosmetic or structural damage.

US 2009/202359 A1 discloses a method for determining pump flow rate.

US 2019/120234 A1 discloses a water pumping control device and system.

### BRIEF SUMMARY OF THE DISCLOSURE

The invention is defined by the claims.

According to the present disclosure, there is provided a method of controlling a condensate pump which comprises a pump motor, a liquid receptacle configured to receive condensate to be pumped, a liquid level sensor received in the liquid receptacle to sense a level of condensate within the liquid receptacle, and a controller connected to the pump motor and the liquid level sensor, the method comprising:
starting a timer once a measured liquid level signal from the liquid level sensor reaches the first predetermined liquid level value;
stopping the timer once a measured liquid level signal from the liquid level sensor reaches a second predetermined liquid level value;
calculating a condensate flow rate; and
powering the pump motor at a rate based on the calculated condensate flow rate.

The first predetermined liquid level value may comprise a lower liquid level value. The second predetermined liquid level value may comprise an upper liquid level value.

The method may comprise obtaining a liquid level signal from the liquid level sensor, and comparing the obtained liquid level signal to a first predetermined liquid level value.

The method may comprise continuing to obtain liquid level signals from the liquid level sensor and comparing the obtained liquid level signal with a second predetermined liquid level value after the first predetermined liquid level value is reached.

The method may comprises powering the pump at a default rate for a predetermined number of cycles prior to powering the pump at a rate based on the calculated condensate flow rate. This may comprise 2, 3, 5 or 10 cycles.

The method may comprise continuing to power the pump until a liquid level signal is obtained which is lower than the first predetermined liquid level value.

The method may comprise switching the pump off and resetting the timer when the liquid level signal obtained from the liquid level sensor is lower than the first predetermined liquid level signal.

The method may comprise calculating the condensate flow rate during each pumping cycle.

The step of powering the pump comprises powering the pump at a rate based on the calculated condensate flow rate and optionally a pre-set safety factor.

The pre-set safety factor may be a multiplication factor between 1 and 3, particularly between 1.2 and 1.8.

The method may further comprise:
starting a pump operating timer once the pump motor is powered;
stopping the pump operating timer once a measured liquid level signal from the liquid level sensor reaches the first predetermined liquid level value;
calculating a pumping rate of the pump from the elapsed pump operating time and known liquid volume in the liquid receptacle between the first and second predetermined liquid levels.

The method may comprise storing the calculated pumping rate in the controller.

The method may comprise comparing the calculated pumping rate to a threshold minimum pump performance rate.

The method may comprise signalling an alert if the calculated pumping rate is less than the threshold minimum pump performance rate.

The present disclosure also provides a method of controlling a condensate pump which comprises a pump motor, a liquid receptacle configured to receive condensate to be pumped, a liquid level sensor received in the liquid receptacle to sense a level of condensate within the liquid receptacle, and a controller connected to the pump motor and the liquid level sensor, the method comprising:
powering the pump at a maximum rate for a first predetermined time period when a measured liquid level signal from the liquid level sensor reaches the upper alert liquid level value;
obtaining a liquid level signal from the liquid level sensor after the first predetermined time period has elapsed and comparing the obtained liquid level signal with a predetermined low level value;
returning the pump to normal operation if the obtained liquid level signal is lower than the predetermined low level value; and
raising an alarm and continuing to operate the pump at the maximum rate if the obtained liquid level signal is greater than the predetermined low level value.

The method may comprise obtaining a liquid level signal from the liquid level sensor; and comparing the obtained liquid level signal to an upper alert liquid level value, prior to powering the pump at the maximum rate.

The method may comprise continuing to operate the pump at the maximum rate for a second predetermined time period if after raising the alarm the predetermined low level value is not obtained.

The step of returning the pump to normal operation may comprise resetting the alarm.

The first predetermined time period may be between 5 and 60 seconds.

The second predetermined time period may be between 10 seconds and 3 minutes.

The present disclosure also provides a method of controlling a condensate pump which comprises a pump motor, a liquid receptacle configured to receive condensate to be pumped, a liquid level sensor received in the liquid receptacle to sense a level of condensate within the liquid receptacle, and a controller connected to the pump motor and the liquid level sensor, the method comprising:
starting a pump operating timer once the pump motor is powered when a liquid level signal from the liquid level sensor reaches a second, upper predetermined liquid level value;
stopping the pump operating timer once a measured liquid level signal from the liquid level sensor reaches a first, lower predetermined liquid level value;
calculating a pumping rate of the pump from the elapsed pump operating time and known liquid volume in the liquid receptacle between the first and second predetermined liquid levels.

The present disclosure also provides a condensate pump comprising:
a pump motor;
a liquid receptacle configured to receive condensate to be pumped;
a liquid level sensor received in the liquid receptacle to sense a level of condensate within the liquid receptacle; and
a controller connected to the pump motor and the liquid level sensor, wherein the controller is configured to operate the condensate pump according to the methods described above.

### BREIF DESCRIPTION OF THE DRAWINGS

Embodiments of the invention are described hereafter, by way of example only, with reference to the accompanying drawings, in which:
Figures 1 & 2 illustrate perspective views of a peristaltic pump;
Figure 3 illustrates a perspective view of the pump of Figures 1 & 2 with the cover and rotor omitted and the connectors and interconnecting head tube separated from the pump housing;
Figure 4 illustrates a front view of the peristaltic pump with the cover omitted;
Figure 5 illustrates a rotor for the peristaltic pump of Figures 1 & 2;
Figures 6A and 6B illustrate cross-sectional views of a head tube in an undeflected state, when new and after extended use;
Figure 7A illustrates a cross-sectional view of a new head tube transitioning from an undeflected state, to a compressed state, and back to its undeflected state;
Figure 7B illustrates a cross-sectional view of a fatigued head tube transitioning from an undeflected state, to a compressed state, and back to its undeflected state;
Figure 8 is a flow chart of a first control method of controlling a condensate pump;
Figure 9 is a flow chart of the control method shown in Figure 6 with additional method steps;
Figure 10 is a flow chart of a second control method of controlling a condensate pump;
Figure 11 is a flow chart of the control method shown in Figure 8 with additional method steps; and
Figure 12 is a flow chart of a third control method of controlling a condensate pump.

### DETAILED DESCRIPTION

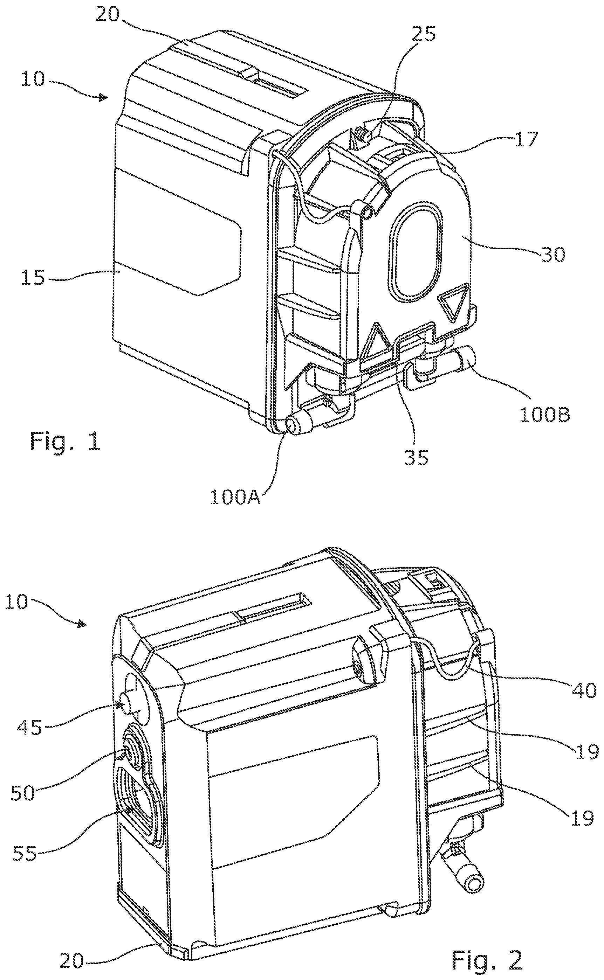

Figures 1 & 2 illustrate perspective views of a peristaltic pump 10. As illustrated, the pump is provided with a housing 15 having anti-vibration components 20 secured to upper and lower surfaces of the housing 15 and a cover 30 attached to a front portion 17 of the housing 15. Depressing a latch 35 on the cover 30 releases the cover 30 for removal from the housing 15 and enables a user to access a rotor 155 within the housing 15. An LED 25 is provided in the housing 15 to indicate an operating status of the peristaltic pump 10. Preferably the LED 25 protrudes from the front portion 17 of the housing 15 so that it is visible to users from a wider range of angles compared to if the LED 25 was within a recess in the housing 15. The cover is preferably made from a transparent material so a user is able to see the operation of the pump 10 without having to remove the cover 30.

As shown in Figure 2, the housing 15 is provided with a data port 45 for connection with a sensor (not shown). In some embodiments, the sensor provides data that controls the mode of operation of the pump. The sensor may not be hard wired to the pump 10 to provide greater flexibility during installation of the pump 10. For example, the pump 10 may be provided with a data cable (not shown) having a connector which can be connected to a corresponding connector and data cable of the sensor. Thus, an indirect connection can be provided between the pump 10 and the sensor. In some cases the sensor is a liquid level sensor, such as a hall effect float sensor or a capacitance sensor. Such a sensor provides the pump with data indicative of a liquid level within a reservoir (not shown) that the pump 10 is pumping fluid from.

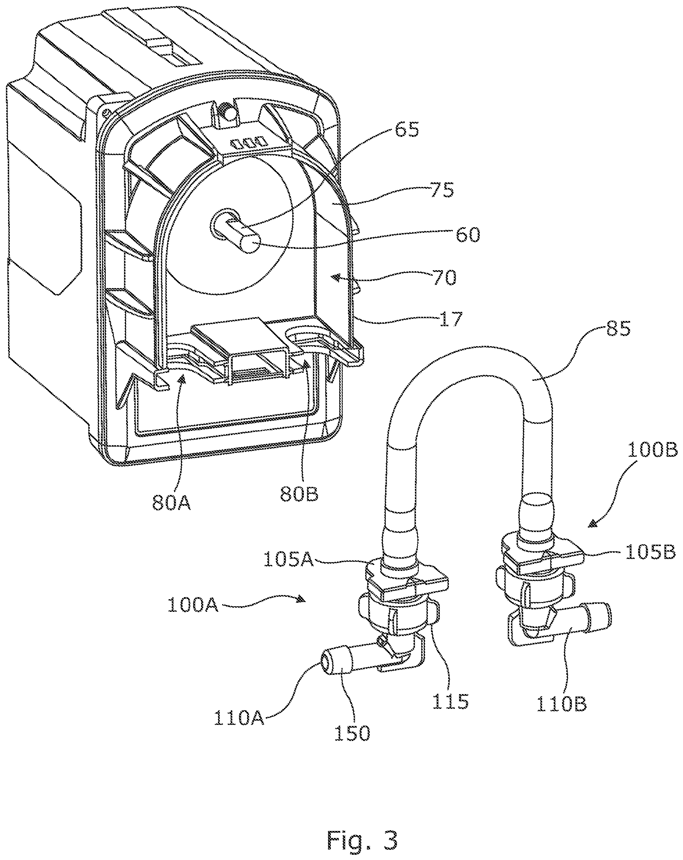

A button 50 provides a user input that can be used to operate the pump, for example, to manually operate the pump to check the pump is operating normally, for example after a head tube 85 has been replaced (see Figure 3). A power port 55 is also provided in the housing 15 for connection to a power supply (not shown) to operate a pump motor (not shown) within the housing 15. Connectors 100A, 100B are also provided for releasably securing a head tube 85 to the housing 15.

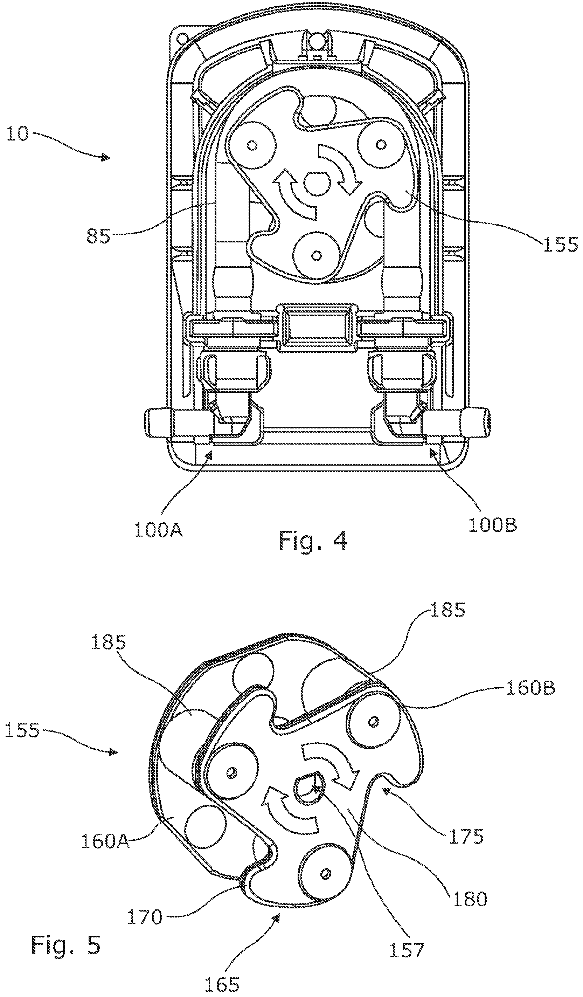

Figure 3 illustrates a perspective view of the pump 10 with the cover 30 and rotor omitted and the connectors 100A, 100B separated from the housing 15. As shown in Figure 3, the front portion 17 provides a chamber 70 and an inner surface 75 against which the head tube 85 is compressed, in use, by the rotor (see also Figure 4).

Preferably, one or more ribs 19 are provided on the housing to stiffen the front portion 17, so as to resist deflection of the front portion 17 during operation of the pump 10. The ribs 19 preferably extend in a direction substantially parallel to a shaft axis. The front portion 17 also includes two slots 80A, 80B (collectively 80 herein) for securing the releasable connectors 100A, 100B to the housing 15 by way of a friction fit. The slots 80A, 80B are sized so as to receive and grip a first part 105A and 105B (collectively 105 herein) of each of the releasable connectors 100A, 100B so that the user can manually release each connector 100A, 100B by pulling a tab portion 115 of the first part 105 away from the slot 80. Preferably the user is able to pull the first part 105 out of the slot 80 using a single hand.

As shown in Figure 3, releasing both connectors 100A, 100B also releases the head tube 85 from the housing 15. This provides a particularly convenient way to remove and replace the head tube 85, for example if the head tube 85 has stiffened over time or has become damaged in use. A second part 110A and 110B (collectively 110 herein) of the connectors 100A, 100B is also provided for connecting the respective fluid line to the first part 105 and thus the head tube 85, typically by way of a barbed end 150. Thus, a fluid flow path is provided from the fluid inlet line to the fluid outlet line via the respective connectors 100A, 100B and the interconnecting head tube 85. The first 105 and second 110 parts are preferably rotatably connected to one another such that, when the connectors 100A, 100B are connected to the housing 15, the second part 110 can rotate from a first position where the barbed end 150 of the second part 110 is pointing perpendicular to a shaft 60 which extends from the pump motor (not shown), to a second position where the barbed end 150 points in a direction parallel to the shaft 60 (not shown). This is particularly advantageous, as leaving the fluid lines connected to the respective connectors 100A, 100B during replacement of the head tube 85 makes for a more efficient maintenance is procedure, as the user simply removes the connectors 100A, 100B from the housing, removes the respective ends of the head tube 85 from the associated connectors 100A, 100B, connects the respective ends of a replacement head tube 85 to each associated connector 100A, 100B and fits the connectors 100A, 100B back to the housing 15. There is no need to also remove the drainage lines, which can be impractical due to the constraints imposed by their stiffness, orientation or location within the confined space in which peristaltic pumps are typically located.

Figure 4 illustrates a side view of the peristaltic pump 10 with the cover 30 omitted. The connectors 100A, 100B are secured to the housing 15 and the head tube 85 is located within the chamber 70. The shaft 60 extends from the pump motor (not shown) housed within the housing 15 and a keyed portion 65 on the shaft 60 (see Figure 3) engages with a corresponding keyed portion 157 on the rotor 155 (see Figure 5) to drive the rotor 155. In use, the motor drives the rotor 155 about an axis of rotation and rollers 185 secured to the rotor 155 compress the head tube 85 in turn against the inner surface 75 of the front portion 17 to drive fluid from the first connector 100A to the second connector 100B.

As shown in Figure 5, the rotor 155 includes three rollers 185 secured between respective inner surfaces of an inner plate 160A and an outer plate 160B. The three rollers 185 are distributed evenly around the perimeter of the plates 160A, 160B which are fixedly aligned by the motor shaft 60 extending through an opening in each of the plates 160A, 160B. By using three rollers 185, more even pressure is applied to the head tube 85 and motor bearing (not shown) which increases the reliability of the pump and also reduces the amount of noise generated during operation of the pump 10. The outer plate 160B is also shown having three fingers 165 extending in a generally tangential direction in a plane defined by the outer plate 160B. The outer plate 160B preferably has a rounded edge profile 170 to reduce the risk of damaging the head tube 85 when removing or reinstalling a head tube 85. A notch or groove 175 is formed between each finger 165 and the outer plate 160B. While the rotor 155 illustrated in Figure 4 rotates in a clockwise direction, it would be apparent that the rotor 155 could be driven in an anticlockwise direction also.

As the pump 10 operates, the head tube 85 is repeatedly compressed and released by the rollers 185 as the rotor 155 rotates about the shaft 60. As the rotor 155 releases a compressed portion of the head tube 85, the compressed portion of the head tube 85 returns to its original size and shape due to its elastic material properties. This elastic return to its original undeflected shape causes liquid to be drawn into the head tube 85 giving the peristaltic pumping effect. After many cycles, the elastic material of the head tube 85 may fatigue or otherwise deteriorate, which can affect the ability of the head tube 85 to return to its original size and shape after compression by the rollers 185. This can affect the flow rate of the condensate flowing through the head tube 85 and therefore the pumping capacity of the condensate pump 10.

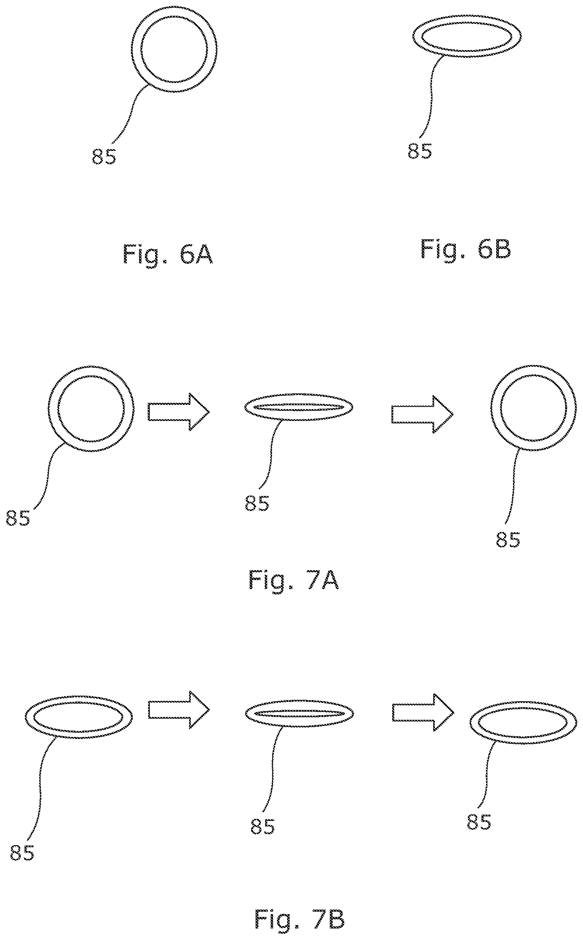

Figures 6A and 6B respectively illustrate a cross-sectional view of the head tube 85 in an undeflected state when the head tube 85 is new (Figure 6A) and when the head tube 85 has suffered fatigue through extended use (Figure 6B). As seen in Figure 6A, when the head tube 85 is relatively new, the head tube 85 has a substantially circular cross section in an undeflected state, i.e. before and after compression by the rollers 185. In other words, due the elasticity of the head tube 85, the head tube 85 returns to its original circular shape when the compression force produced by the rollers 185 is removed. As seen in Figure 6B, when the head tube 85 has been used for many cycles and lost some of its elasticity, the head tube 85 does not return to its original shape when undeflected and instead assumes a substantially ovular cross section when the compression forces are removed. This results in a reduction of the pumping rate able to be generated by the condensate pump 10 to pump away accumulated condensate, since the head tube 85 has a lower cross sectional area when uncompressed. This is illustrated in Figures 7A and 7B which respectively illustrate a new head tube 85, before, during and after compression by a roller 185 (Figure 7A) and a fatigued head tube 85, before, during and after compression by a roller 185 (Figure 7B). It will be appreciated that the difference in cross-sectional area of the head tube 85 between the undeflected and compressed states for the new head tube 85 (Figure 7A) is significantly greater than the difference in cross-sectional area of the head tube 85 between the undeflected and compressed states for the fatigued head tube 85 (Figure 7B). Therefore, once the head tube 85 reaches a fatigued condition, it must then be replaced in order to return the pump 10 to maximum efficiency and functionality.

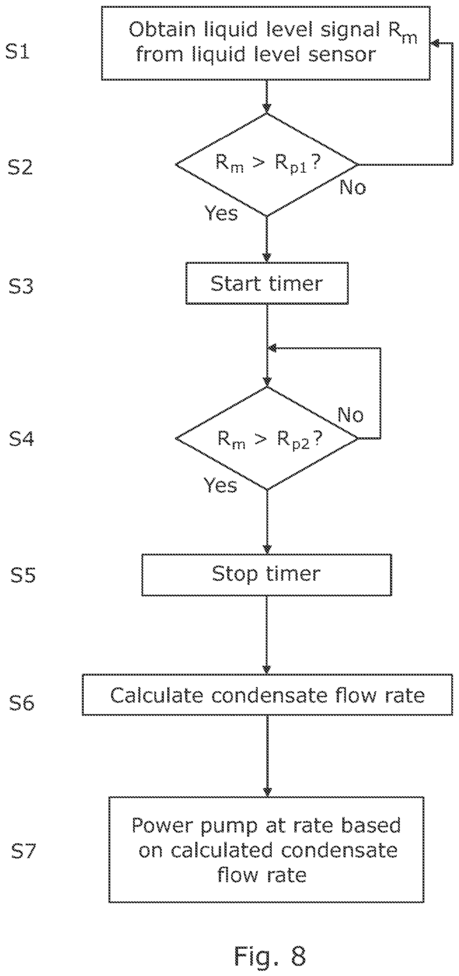

Figure 8 is a flow chart illustrating a first control method for controlling a condensate pump such as a peristaltic condensate pump described above. The pump comprises a pump motor to drive the pump, for example to rotate a rotor 155 as described above, a liquid receptacle configured to receive condensate to be pumped, a liquid level sensor received in the liquid receptacle to sense a level of condensate within the liquid receptacle, and a controller connected to the pump motor and the liquid level sensor. The controller has a memory and a processor (not shown). It will be appreciated that as condensate is produced by the HVAC unit or other condensate-producing system the condensate pump 10 is being used with, the condensate flows into the liquid receptacle and the level of condensate in the liquid receptacle increases.

In a first step S1 of the method, the controller obtains a liquid level signal Rₘ from the liquid level sensor. In a second step S2, the measured liquid level signal Rₘ is compared to a first predetermined liquid level value Rₚ₁ to determine if the measured liquid level signal Rₘ is greater than the first predetermined liquid level value Rₚ₁. The first predetermined liquid level value Rₚ₁ corresponds to a first, lower threshold liquid level within the liquid receptacle.

In a third step S3 of the method, if the first predetermined liquid level value Rₚ₁ has been reached, the controller starts a timer. At a fourth step S4 of the method, the controller continues to measure the liquid level and compare the sensed liquid level signal Rₘ to a second predetermined liquid level value Rₚ₂. The second predetermined liquid level value Rₚ₂ corresponds to a second, upper liquid level within the liquid receptacle. The second predetermined liquid level value Rₚ₂ represents a higher liquid level than the first predetermined liquid level value Rₚ₁.

In a fifth step of the method, if the second predetermined liquid level value Rₚ₂ is reached, the timer is stopped

In a sixth step S6 of the method, the controller calculates the flow rate of the condensate entering the liquid receptacle. The condensate flow rate is determined by the time measured by the timer between obtaining the first and second predetermined liquid level values Rₚ₁, Rₚ₂ and the known volume of liquid in the liquid receptacle between the predetermined upper and lower liquid levels.

Finally, in a seventh method step S7, the pump motor is powered at a rate based on the calculated condensate flow rate to pump condensate from the liquid receptacle.

In another embodiment of the above-described method, the liquid level may not be monitored at regular intervals during operation of the pump. In such an embodiment, the timer would simply be started once the liquid level sensor detects the first predetermined liquid level value Rₚ₁ and continues the timer running until the second predetermined liquid level value Rₚ₂ is reached.

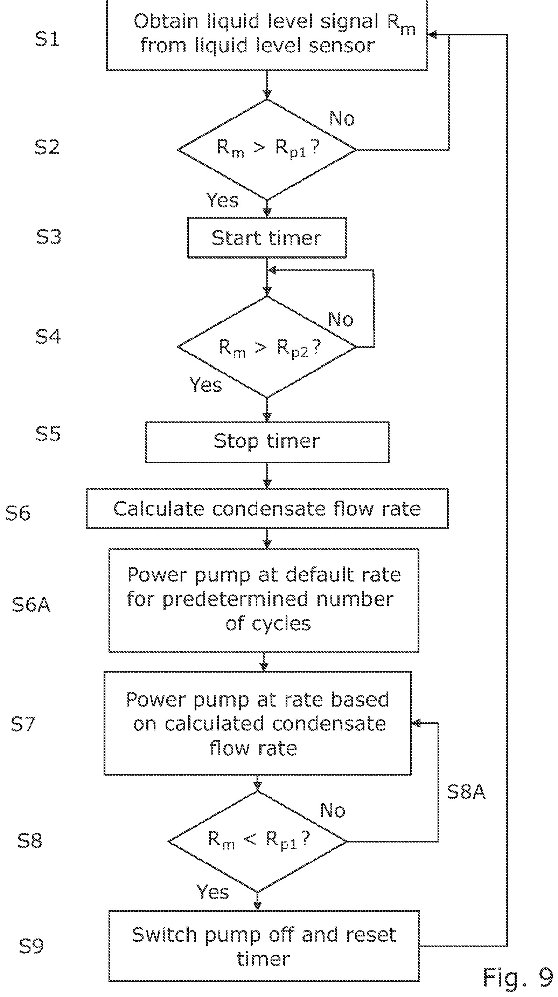

Figure 9 is a flow chart illustrating a method as per that described above in relation to Figure 8, but with additional method steps. Here the method comprises an additional eighth step S8 comprising continuing to power the pump at a rate based on the calculated condensate flow rate (step S7) until the measured liquid level signal Rₘ reaches (i.e. is at or lower than) the first predetermined liquid level value Rₚ₁. Once a measured liquid level value Rₘ, at or lower than the first predetermined liquid level value Rₚ₁, is obtained, in a ninth step S9 the pump is switched off and the timer is reset. With the pump off and timer reset, the cycle of calculating the condensate flow rate and powering the pump based on the calculated condensate flow rate can begin again back to step S1.

The method may comprise calculating the condensate flow rate during each pumping cycle. In this case, the controller is configured to store the calculated condensate flow rate of each cycle. Additionally, the controller is configured to replace the stored calculated condensate flow rate of a cycle with the newly calculated condensate flow rate of the next cycle, and so on. By this method, the pump 10 can adapt its required pumping performance to changes in the rate of condensate production. For example, if a condensate-producing system increases the volume of condensate being produced and fed to the liquid receptacle, this will be detected straight away in the next timing cycle and the pump 10 can be operated in dependence on the newly calculated condensate flow rate.

Furthermore, as seen in Figure 9, the method may comprise an optional intermediate step S6A of powering the pump at a default rate for a predetermined number of cycles after the condensate flow rate is calculated, and prior to powering the pump at a rate based on the calculated condensate flow rate. This step may be done in order to purge the system and to reach a steady state.

The step S7 of powering the pump at a rate based on the calculated condensate flow rate may comprise powering the pump at a rate based on the calculated condensate flow rate plus a pre-set safety factor. For example, the pump may be powered to operate at a rate of 1.n times the calculated flow rate, where "n" is the pre-set safety factor. For example, the pre-set safety factor may be between 0 and 9, (such that the pump would be powered to operate at 1.0 - 1.9 times the calculated flow rate), and particularly may be 5 (such that the pump would be powered to operate at 1.5 times the calculated flow rate). Alternatively, the pump may be powered in other multiples of the calculated flow rate such as more than twice the calculated flow rate. In this way, the accumulated condensate can be pumped away at a selected rate proportional to the calculated rate at which condensate is flowing into the liquid receptacle.

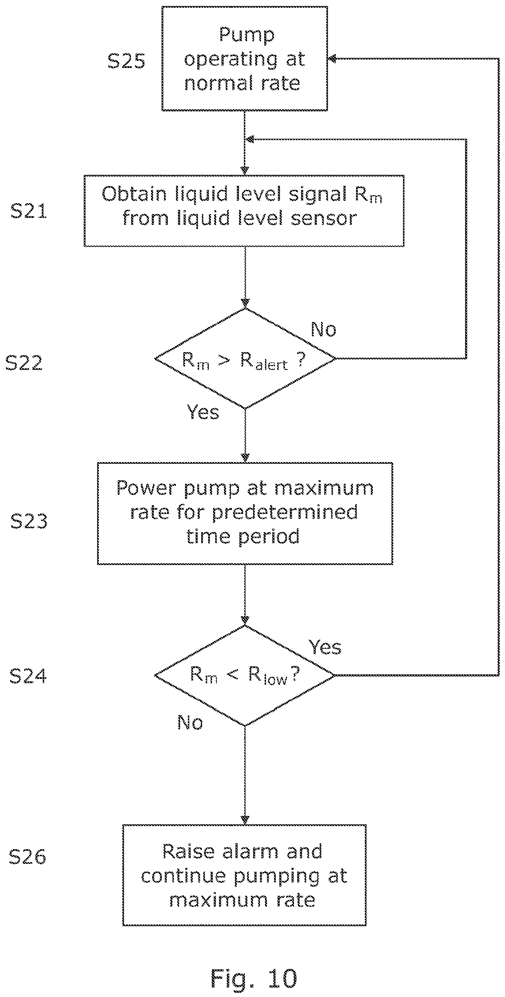

Figure 10 is a flow chart illustrating a second control method for controlling the condensate pump. The method comprises a first step S21 of obtaining a liquid level signal Rₘ from the liquid level sensor.

In a second step S22 of the method, the measured liquid level signal Rₘ is compared to an upper alert liquid level value Rₐₗₑᵣₜ. In a third step S23, if the measured liquid level signal Rₘ reaches the upper alert liquid level value Rₐₗₑᵣₜ, , the pump is powered at a maximum rate for a first predetermined time period. In other words, if the measured liquid level signal Rₘ is equal to or exceeds a pre-set upper alert liquid level value Rₐₗₑᵣₜ, the controller is configured to power the pump at a maximum rate for a pre-set period of time. The first predetermined time period, at which the pump is operating at a maximum rate, lasts for a pre-set number of seconds. In some embodiments, the first predetermined time period is between 10 and 90 seconds, and may be between 20 and 60 seconds, or other may be other periods depending on pump specification and/or liquid receptacle volume, and/or calculated condensate flow rate.

Whilst the pump is operating at the maximum rate, the controller and liquid level sensor continue to monitor the level of condensate in the liquid receptacle. In a fourth step S24 of the method, the measured liquid level signal Rₘ is compared to a predetermined low level value R_{low} after operating the pump at a maximum rate for the first predetermined time period.

In a fifth method step S25, if the measured liquid level signal Rₘ reaches or is lower than the predetermined low level value R_{low}, the controller returns the pump to normal operation - for example, the controller may return the pump 10 to step S1 of the previously-described control method to begin monitoring the condensate level in the receptacle for when the first predetermined liquid level value Rₚ₁ is reached again. Since the maximum pump rate and the difference in liquid receptacle volume between the upper alert level signal Rₐₗₑᵣₜ and the low level signal R_{low} are known, a predetermined first time period sufficient to empty the liquid receptacle can be determined. However, if after operating the pump at the maximum rate for the first predetermined time period the predetermined low level signal R_{low} is not obtained, at a sixth step S26, an alarm is raised and the pump is continued to operate at the maximum rate. This is because despite the initial maximum rate of pump operation, the condensate had not been pumped away as expected, indicating a potential fault in the pump or excessive condensate production by the condensate-producing system.

As described previously, in another embodiment of the above-described method, the liquid level may not be monitored at regular intervals during the method and during operation of the pump. In such an embodiment, the pump would be operated at maximum rate once the liquid level sensor detects the upper liquid level alert value Rₐₗₑᵣₜ is detected.

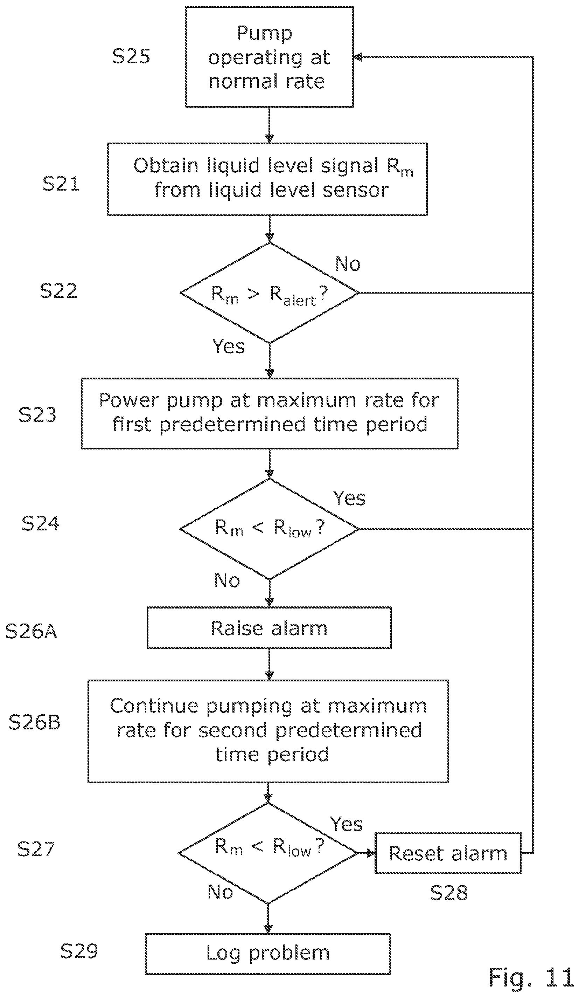

Figure 11 is a flow chart illustrating the control method as per that described above in relation to Figure 10, but with additional method steps. Here the method comprises step S26A of raising an alarm if the measured liquid level signal Rₘ does not reach the predetermined low level value R_{low} at step S24, and then at step S26B comprises continuing to operate the pump at the maximum rate, once the alarm has been raised at step S26A, for a second predetermined time period. The second predetermined time period, at which the pump is operating at a maximum rate once the alarm has been raised, lasts for a pre-set number of seconds or minutes. In some embodiments, the second predetermined time period is between 10 seconds and 3 minutes, and may be between 20 second and 2 minutes, or around 1 minute, or other may be other periods depending on pump specification and/or liquid receptacle volume, and/or calculated condensate flow rate.

After operating the pump at the maximum rate for the second predetermined time period, at step S27, the controller determines if the obtained liquid level signal Rₘ is lower than the predetermined low level value R_{low}, and the controller resets the alarm at step S28 returns the pump to normal operation.

However, if after operating the pump at the maximum rate for the second predetermined time period the predetermined low level value R_{low} is not obtained, in step S29 of the method, the controller is configured to log that there is a problem in the system. The controller may be configured to take further steps such as shutting down the condensate pump and associated condensate-generating apparatus (such as an air conditioning unit), and sending an alert signal to a remote engineer indicating that there is an issue with the condensate pump which requires investigation.

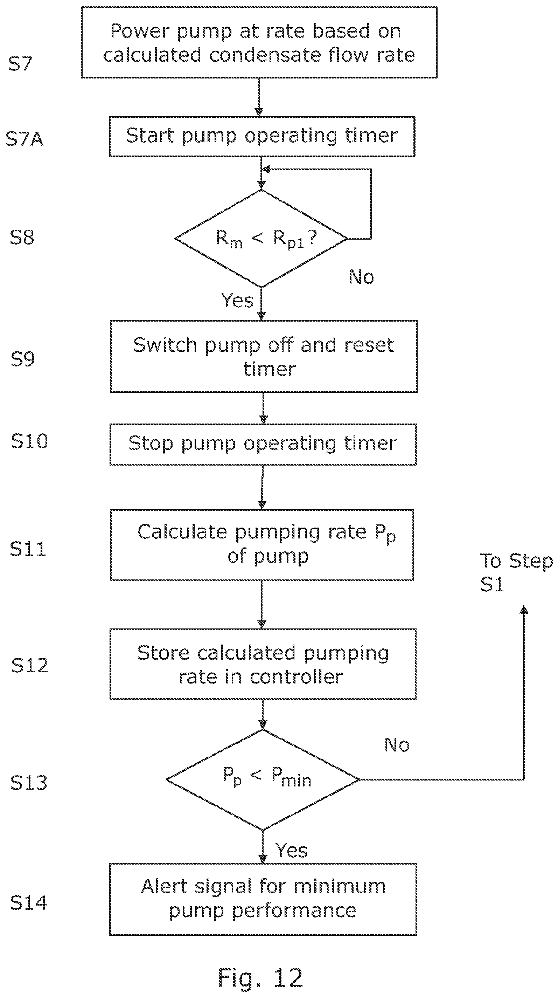

Figure 12 is a flow chart illustrating a third control method for controlling a condensate pump. The third control method may be implemented in combination with the first control method described above with reference to Figures 8 and 9. However, the third control method may alternatively be implemented independently of the other control methods described herein. For ease of reference, the third control method will be described in the exemplary embodiment with reference to the steps of the first control method, where like method steps retain the same reference numerals.

As described above, head tubes 85 can lose elasticity through extended use and this fatigue can reduce the pumping performance of the pump. It would be advantageous to determine when a head tube 85 has fatigued to a point where the pump performance falls below an acceptable level. Such a minimum pumping performance rate is referred to herein as Pₘᵢₙ. The third control method enables the pumping performance to be monitored.

In a first step, following from step S7 of the first control method (at which the pump is powered based on the calculated flow rate of condensate being received by the liquid receptacle), a new step S7A involves a pump operating timer being started when the pump is powered on. The pump operating timer continues whilst the pump is operating until at step S8 it is determined that the measured liquid level signal Rₘ reaches (i.e. is at or lower than) the first predetermined liquid level value Rₚ₁. As per the first control method, at step S9, the pump is switch off (and the timer - i.e. the timer that was measuring the time for condensate to flow into the liquid receptacle up to the second predetermined liquid level value - is reset). Then at step S10, also at the point the measured liquid level signal Rₘ reaches the first predetermined liquid level value Rₚ₁, the pump operating timer is stopped.

At step S11, a pumping rate Pₚ of the pump is calculated. This can be done as the volume within the liquid receptacle between the upper and lower liquid levels is known. This calculated pumping rate Pₚ is then stored in the controller at step S12, for example in a memory of the controller.

At step S13, the calculated pumping rate Pₚ is compared to a minimum pump performance value Pₘᵢₙ and if the calculated pumping rate Pₚ is greater than the minimum pump performance value Pₘᵢₙ then the pump is performing at an acceptable level. Therefore, the pump can continue in normal operation and the method may then return to step S1. However, if at step S13 it is determined that the calculated pumping rate Pₚ is less than the minimum pump performance value Pₘᵢₙ, then the pump is not performing adequately, which may be due to excessive fatigue of the head tube 84. Therefore, at step S14, the controller can generate an alert signal indicating that the minimum pump performance threshold has been reached. Such an alert may be a light or audible signal on the pump, or a message transmitted to a maintenance server or engineer to signal that the pump needs maintenance and likely the head tube 85 replacing.

Steps S7A - S11 may be repeated on every operation of the pump to monitor pumping performance over time, through the life of the pump/head tube 84. In particular, step S12 may be repeated each time so that the performance of the pump can be monitored over time, such as any gradual deterioration of pump performance. The method may include outputting stored pump rates over a selected time period, or since the last head tube replacement, to indicate performance/deterioration over time. In alternative arrangements, the pump rate Pₚ may be calculated and/or stored at regular intervals instead of upon every operation of the pump, for example every x operations of the pump, where x may be any suitable integer, such as every 2, 5, 10, 20, etc., operations of the pump.

It is intended within the scope of the present disclosure that a condensate pump may utilise either one of the disclosed control methods, or both of the control methods, to control operation of the condensate pump. For instance, the disclosed first method may further include the steps of the disclosed second method if an upper alert liquid level value Rₐₗₑᵣₜ is obtained.

## Claims

1. A method of controlling a condensate pump (10) which comprises a pump motor, a liquid receptacle configured to receive condensate to be pumped, a liquid level sensor received in the liquid receptacle to sense a level of condensate within the liquid receptacle, and a controller connected to the pump motor and the liquid level sensor, the method comprising:
starting a timer once a measured liquid level signal from the liquid level sensor reaches the first predetermined liquid level value;
stopping the timer once a measured liquid level signal from the liquid level sensor reaches a second predetermined liquid level value;
calculating a condensate flow rate; **characterised by**
powering the pump motor at a rate based on the calculated condensate flow rate;
wherein the method comprises powering the pump at a default rate for a predetermined number of cycles prior to powering the pump at a rate based on the calculated condensate flow rate.

2. A method of controlling a condensate pump (10) according to claim 1, wherein the method comprises continuing to power the pump until a liquid level signal is obtained which is lower than the first predetermined liquid level value.

3. A method of controlling a condensate pump (10) according to claim 2, wherein the method comprises switching the pump off and resetting the timer when the liquid level signal obtained from the liquid level sensor is lower than the first predetermined liquid level signal.

4. A method of controlling a condensate pump (10) according to any of claims 1 to 3, wherein the method comprises calculating the condensate flow rate during each pumping cycle.

5. A method of controlling a condensate pump (10) according to any preceding claim, wherein the step of powering the pump comprises powering the pump at a rate based on the calculated condensate flow rate and a pre-set safety factor.

6. A method of controlling a condensate pump (10) according to claim 5, wherein the pre-set safety factor is a multiplication factor between 1 and 3, particularly between 1.2 and 1.8.

7. A method of controlling a condensate pump (10) according to any preceding claim, further comprising:
starting a pump operating timer once the pump motor is powered;
stopping the pump operating timer once a measured liquid level signal from the liquid level sensor reaches the first predetermined liquid level value;
calculating a pumping rate of the pump from the elapsed pump operating time and known liquid volume in the liquid receptacle between the first and second predetermined liquid levels.

8. A method of controlling a condensate pump (10) according to claim 7, comprising storing the calculated pumping rate in the controller.

9. A method of controlling a condensate pump (10) according to claim 7 or claim 8, comprising comparing the calculated pumping rate to a threshold minimum pump performance rate.

10. A method of controlling a condensate pump (10) according to claim 9, comprising signalling an alert if the calculated pumping rate is less than the threshold minimum pump performance rate.

11. A condensate pump (10) comprising:
a pump motor;
a liquid receptacle configured to receive condensate to be pumped;
a liquid level sensor received in the liquid receptacle to sense a level of condensate within the liquid receptacle; and
a controller connected to the pump motor and the liquid level sensor,
wherein the controller is configured to operate the condensate pump according to the methods of any of claims 1 to 10.

## Patentansprüche

1. Verfahren zum Steuern einer Kondensatpumpe (10), die einen Pumpenmotor, einen Flussigkeitsbehalter, der das zu pumpende Kondensat empfangt, einen im Flussigkeitsbehalter angeordneten Fullstandsensor zum Erfassen eines Kondensatstands im Flussigkeitsbehalter sowie einen mit dem Pumpenmotor und dem Fullstandsensor verbundenen Controller umfasst, wobei das Verfahren Folgendes umfasst:
Starten eines Timers, sobald ein gemessenes Fullstandsignal vom Fullstandsensor den ersten vorgegebenen Fullstandwert erreicht;
Anhalten des Timers, sobald ein gemessenes Fullstandsignal vom Fullstandsensor einen zweiten vorgegebenen Fullstandwert erreicht;
Berechnen einer Kondensatdurchflussrate; **gekennzeichnet durch** Folgendes:
Antreiben des Pumpenmotors mit einer Leistung, die sich nach der berechneten Kondensatdurchflussrate richtet;
wobei das Verfahren Folgendes umfasst: Betreiben der Pumpe fur eine vorbestimmte Anzahl von Zyklen mit einer Standardleistung, bevor die Pumpe mit einer Leistung betrieben wird, die auf der berechneten Kondensatdurchflussrate basiert.

2. Verfahren zum Steuern einer Kondensatpumpe (10) gemaß Anspruch 1, wobei das Verfahren Folgendes umfasst: Fortsetzen des Pumpenbetriebs so lange, bis ein Fullstandsignal erhalten wird, das unter dem ersten vorgegebenen Fullstandwert liegt.

3. Verfahren zum Steuern einer Kondensatpumpe (10) gemaß Anspruch 2, wobei das Verfahren das Abschalten der Pumpe und das Zurucksetzen des Zeitgebers umfasst, wenn das vom Fullstandsensor erfasste Fullstandsignal unter dem ersten vorgegebenen Fullstandsignal liegt.

4. Verfahren zum Steuern einer Kondensatpumpe (10) gemaß einem der Anspruche 1 bis 3, wobei das Verfahren das Berechnen der Kondensatdurchflussrate wahrend jedes Pumpzyklus umfasst.

5. Verfahren zur Steuerung einer Kondensatpumpe (10) gemaß einem der vorstehenden Anspruche, wobei der Schritt des Antreibens der Pumpe das Antreiben der Pumpe mit einer Leistung umfasst, die auf der berechneten Kondensatdurchflussrate und einem voreingestellten Sicherheitsfaktor basiert.

6. Verfahren zur Steuerung einer Kondensatpumpe (10) gemaß Anspruch 5, wobei der voreingestellte Sicherheitsfaktor ein Multiplikationsfaktor zwischen 1 und 3, insbesondere zwischen 1,2 und 1,8, ist.

7. Verfahren zum Steuern einer Kondensatpumpe (10) gemaß einem der vorstehenden Anspruche, das ferner Folgendes umfasst:
Starten eines Pumpenbetriebs-Timers, sobald der Pumpenmotor mit Strom versorgt wird;
Anhalten des Pumpenbetriebs-Timers, sobald ein vom Fullstandsensor gemessenes Fullstandsignal den ersten vorgegebenen Fullstandwert erreicht;
Berechnen der Forderleistung der Pumpe anhand der verstrichenen Betriebszeit der Pumpe und des bekannten Flussigkeitsvolumens im Flussigkeitsbehalter zwischen dem ersten und dem zweiten vorgegebenen Fullstand.

8. Verfahren zur Steuerung einer Kondensatpumpe (10) gemaß Anspruch 7, wobei die berechnete Forderleistung im Controller gespeichert wird.

9. Verfahren zur Steuerung einer Kondensatpumpe (10) gemaß Anspruch 7 oder Anspruch 8, bei dem die berechnete Forderleistung mit einem minimalen Pumpenleistungsraten-Schwellenwert verglichen wird.

10. Verfahren zur Steuerung einer Kondensatpumpe (10) gemaß Anspruch 9, bei dem ein Alarm ausgelost wird, wenn die berechnete Forderleistung unter dem minimalen Pumpenleistungsraten-Schwellenwert liegt.

11. Kondensatpumpe (10), die Folgendes umfasst:
einen Pumpenmotor;
einen Flussigkeitsbehalter, der ausgebildet ist, das abzupumpende Kondensat zu empfangen;
einen im Flussigkeitsbehalter enthaltenen Fullstandsensor, der den Kondensatfullstand im Flussigkeitsbehalter erfasst; und
einen Controller, der mit dem Pumpenmotor und dem Fullstandsensor
verbunden ist,
wobei der Controller so ausgebildet ist, dass er die Kondensatpumpe gemaß den Verfahren eines der Anspruche 1 bis 10 betreibt.

## Revendications

1. Procédé dé commandé d'uné pompé a condénsat (10) qui comprénd un motéur dé pompé, un récipiént dé liquidé configuré pour récévoir du condénsat a pompér, un captéur dé nivéau dé liquidé réçu dans lé récipiént dé liquidé pour détéctér un nivéau dé condénsat a l'intériéur du récipiént dé liquidé, ét un controléur connécté au motéur dé pompé ét au captéur dé nivéau dé liquidé, lé procédé comprénant :
lé démarragé d'un chronométré dés qu'un signal dé nivéau dé liquidé mésuré provénant du captéur dé nivéau dé liquidé attéint la prémiéré valéur prédétérminéé dé nivéau dé liquidé ;
l'arrét du chronométré dés qu'un signal dé nivéau dé liquidé mesuré provenant du captéur dé nivéau dé liquidé attéint uné déuxiémé valéur prédétérminéé dé nivéau dé liquidé ;
lé calcul d'un débit dé condénsat ; **caractérisé par**
l'actionnémént du motéur dé pompé sélon un régimé basé sur lé débit dé condénsat calculé ;
lé procédé comprénant l'actionnémént dé la pompé sélon un régimé par défaut péndant un nombré prédétérminé de cyclés avant l'actionnémént dé la pompé sélon un régimé basé sur lé débit dé condénsat calculé.

2. Procédé dé commandé d'uné pompé a condénsat (10) sélon la révéndication 1, lé procédé comprenant la poursuité dé l'actionnémént dé la pompé jusqu'a l'obténtion d'un signal dé nivéau dé liquidé qui ést infériéur a la prémiéré valéur prédétérminéé dé nivéau dé liquidé.

3. Procédé dé commandé d'uné pompé a condénsat (10) sélon la révéndication 2, lé procédé comprenant la misé à l'arrêt dé la pompé ét la rémisé à zéro du chronométré lorsqué lé signal dé nivéau dé liquidé obténu a partir du captéur dé nivéau dé liquidé ést infériéur au prémiér signal prédétérminé dé nivéau dé liquidé.

4. Procédé dé commandé d'uné pompé a condénsat (10) sélon l'uné quélconqué dés révéndications 1 a 3, lé procédé comprénant lé calcul du débit dé condénsat péndant chaqué cyclé dé pompagé.

5. Procédé dé commandé d'uné pompé a condénsat (10) sélon l'uné quélconqué dés révéndications précédéntés, dans léquél l'étapé d'actionnémént dé la pompé comprénd l'actionnémént dé la pompé sélon un régimé basé sur lé débit dé condénsat calculé et sur un factéur dé sécurité prédéfini.

6. Procédé dé commandé d'uné pompé a condénsat (10) sélon la révéndication 5, dans léquél lé factéur dé sécurité prédéfini ést un factéur dé multiplication compris éntré 1 ét 3, én particuliér éntré 1,2 ét 1,8.

7. Procédé dé commandé d'uné pompé a condénsat (10) sélon l'uné quélconqué dés révéndications précédéntés, comprénant én outré :
lé démarragé d'un chronométré dé fonctionnémént dé la pompé dés qué lé motéur dé pompé ést actionné ;
l'arrét du chronométré dé fonctionnémént dé la pompé dés qu'un signal dé nivéau dé liquidé mesuré provenant du captéur dé nivéau dé liquidé attéint la prémiéré valéur prédétérminéé dé nivéau dé liquidé ;
lé calcul d'un débit dé pompagé dé la pompé a partir du témps dé fonctionnémént écoulé dé la pompé ét du volumé connu dé liquidé dans lé récipiént dé liquidé éntré lés prémiér ét déuxiémé nivéaux prédétérminés dé liquidé.

8. Procédé dé commandé d'uné pompé a condénsat (10) sélon la révéndication 7, comprénant lé stockagé du débit dé pompagé calculé dans lé controléur.

9. Procédé dé commandé d'uné pompé a condénsat (10) sélon la révéndication 7 ou la révéndication 8, comprénant la comparaison du débit dé pompagé calculé a un séuil dé débit minimal dé pérformancé dé la pompé.

10. Procédé dé commandé d'uné pompé a condénsat (10) sélon la révéndication 9, comprénant la signalisation d'uné alérté si lé débit dé pompagé calculé est infériéur au séuil dé débit minimal dé pérformancé dé la pompé.

11. Pompé a condénsat (10) comprénant :
un motéur dé pompé ;
un récipiént dé liquidé configuré pour récévoir du condénsat à pomper ;
un captéur dé nivéau dé liquidé réçu dans lé récipiént dé liquidé pour détéctér un nivéau dé condénsat a l'intériéur du récipiént dé liquidé ; ét
un controléur connécté au motéur dé pompé ét au captéur dé nivéau dé liquidé,
dans laquéllé lé controléur ést configuré pour fairé fonctionnér la pompé a condénsat sélon lés procédés dé l'uné quélconqué dés révéndications 1 a 10.
